# EUROPÄISCHE PATENTSCHRIFT

(11) **EP 0 415 466 B1**
(45) Veröffentlichungstag und Bekanntmachung des Hinweises auf die Patenterteilung: **23.06.1993**
(21) Anmeldenummer: 90201846.4
(22) Anmeldetag: 06.07.1990
(51) Int. Cl.: A01F 25/20

(54) **Vorrichtung zum Schneiden von Silagegut aus einem Silagegutvorrat**
Apparatus for cutting silage from a silage supply
Appareil pour découper du fourrage ensilé d'un silo

(30) Priorität: 30.08.1989 NL 8902190
(43) Veröffentlichungstag der Anmeldung: 06.03.1991
(73) Patentinhaber: LITECH B.V., NL-7521 PD Enschede (NL)
(72) Erfinder: Liet, Cornelis Hendricus, NL-7581 PJ Losser (NL)
(74) Vertreter: de Vries, Johannes Hendrik Fokke

(56) Entgegenhaltungen:
- EP-A- 0 014 154
- EP-A- 0 090 906
- DE-A- 3 602 403
- DE-A- 3 837 509

## Beschreibung

Die Erfindung bezieht sich auf eine Vorrichtung zum Schneiden von Silagegut aus einem Silagegutvorrat gemäss dem Oberbegriff des Anspruches 1.

Bei der bekannten Vorrichtung dieser Art (DE-A-3 837 509) ist das Schneidschild drehbar mit den Enden der Schwenkarme verbunden und ist mittels einer hydraulischen Zylinder-Kolbeneinheit gegenüber den Schwenkarmen drehbar um das Schneidmesser in eine gewünschte Stellung zum Schneiden von einem Stück Silagegut zu verstellen. Dadurch hat diese bekannte Vorrichtung das Nachteil, dass die Stellung des Schneidmessers während des Schneidens von Silagegut für verschiedene Stellungen des Schneidschildes gegenüber den Schwenkarmen variert, wodurch die Stellung des Schneidmessers gegenüber dem Schneidkreis im allgemeinen ungünstig ist. Während des Schneidens kann hierdurch zwischen dem Schneidmesser und dem Träger Spiel entstehen, wodurch Gewächs zwischen das Schneidmesser und den Träger gelangen kann und die Schneidwirkung verloren geht. Ueberdies ist die Bedienung der bekannten Vorrichtung ziemlich kompliziert weil jeweils die Stellung des Schneidschildes gegenüber den Schwenkarmen eingestellt werden muss.

Die Erfindung beabsichtigt eine Vorrichtung der obenerwähnten Art zu schaffen, wobei die erwähnten Nachteile aufgehoben sind.

Dazu wird die erfindungsgemässe Vorrichtung gekennzeichnet durch die Merkmale des Kennzeichnenden Teiles des Anspruches 1.

In dieser Weise wird erreicht, dass von einer einmal eingenommenen Position vor dem Silagegutvorrat einige aufeinanderfolgenden Silagegutstücke aus dem Silagegutvorrat geschnitten werden können, wobei immer eine bestmögliche Schnittstellung des Schneidmessers gegenüber dem Schneidkreis gewährleistet ist, während die Bedienung der Einrichtung besonders einfach ist. Dadurch wird kein Spiel zwischen dem Schneidmesser und dem Träger entstehen können, sodass eine gute Schneidwirkung aufrechterhalten bleibt.

Gemäss der Erfindung kann das in den Ladebehälter Schieben von dem geschnittenen Silagegut in günstiger Weise erreicht werden dadurch, dass die erwähnten Mittel das Schneidschild bis innerhalb des Ladebehälters verstellen können.

Weiterhin ist es bei der Vorrichtung der beschriebenen Art möglich, dass der Ladebehälter an der vom Schneidschild abgekehrten Seite mit Dosiermittel für dosiert Abgeben von dem Silagegut versehen ist. Bei der bekannten Vorrichtung ist zum Zuführen von dem Silagegut an die Dosiermittel der Ladebehälter mit einem Förderglied versehen, wodurch die Herstellungskosten erhöht werden.

Gemäss einer besonders günstigen Ausführung der erfindungsgemässen Vorrichtung ist es bei einer derartigen Vorrichtung möglich, dass das Schneidschild durch die erwähnten Mittel innerhalb des Ladebehälters verstellbar ist zum Zuführen von dem Silagegut an die Dosiermittel.

Dadurch kann mit Vorteil das Schneidschild als Förderglied angewandt werden und wird kein separates Vörderglied mehr benötigt.

Die Erfindung wird nachstehend näher erläutert an Hand der Zeichnung, in der ein Ausführungsbeispiel der Vorrichtung dargestellt ist.

Fig. 1 ist eine schematisch dargestellte Seitenansicht einer Ausführung der erfindungsgemässen Vorrichtung, wobei die Schwenkarme sich in der oberen Stellung befinden.

Fig. 2 ist eine Fig. 1 entsprechende Seitenansicht, wobei die Schwenkarme sich in der unteren Stellung befinden.

Fig. 3 ist eine Fig. 1 entsprechende Seitenansicht, wobei die Schwenkarme sich in der unteren Stellung befinden und das Schneidschild ganz in dem Ladebehälter eingezogen ist.

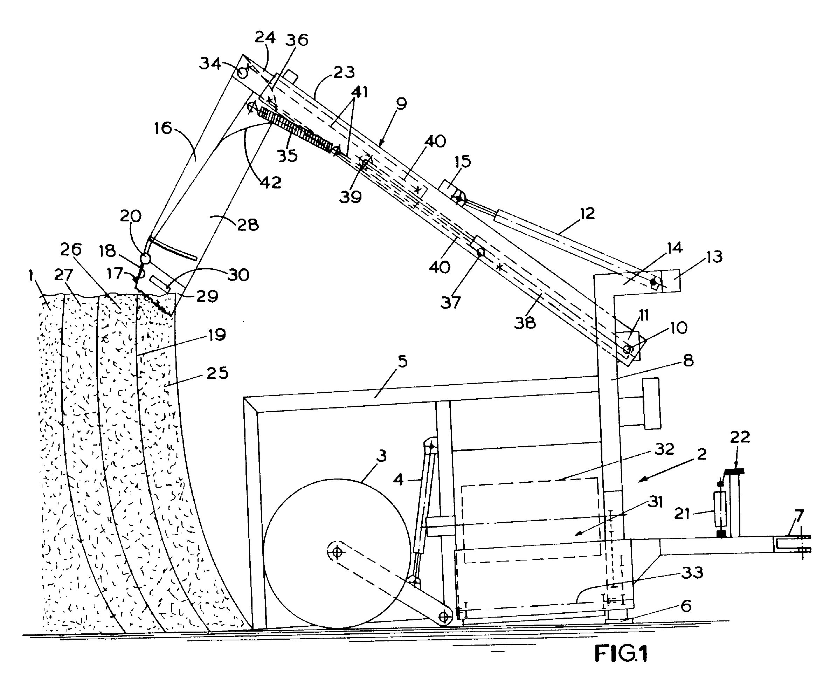

In der Zeichnung ist eine Vorrichtung zum Schneiden von Silagegut aus einem Silagegutvorrat schematisch in verschiedenen Stellungen gezeigt. Die Vorrichtung ist versehen mit einem fahrbaren Gestell 2, das zwei auf- und abwärts bewegliche Räder 3 hat, von den in den Fig. 1-3 jeweils nur ein sichtbar ist. Die Räder 3 sind ab- und aufwärts beweglich mittels einer Zylinder-Kolbeneinheit 4. In der Zeichnung sind die Räder 3 bis zu einer Stellung eingezogen, in der ein Ladebehälter 5, der Teil von dem Gestell 2 ist, mit dem offenen hinteren Ende auf dem Bodem ruht und an der vorderen Seite mit zwei Stützen 6, von den in der Zeichnung nur eine sichtbar ist, gleichfalls auf dem Bodem ruht. An der vorderen Seite enthält das Gestell 2 weiterhin eine Kopplung 7, mit der die beschriebene Vorrichtung mit einem Schlepper koppelbar ist.

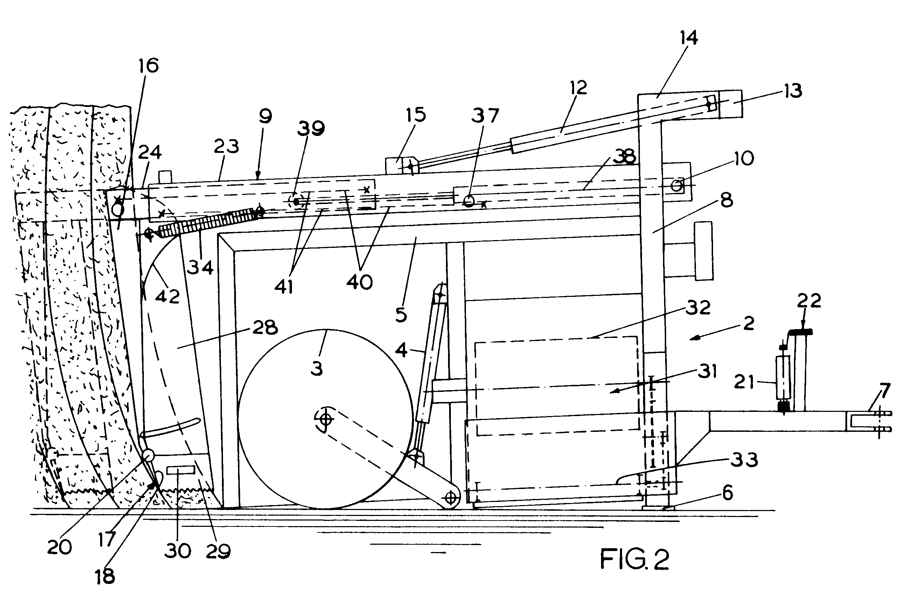

Die Vorrichtung ist ferner mit zwei Hauptstützbalken 8 versehen, die zwei, drehbar um eine Achse 10 in Stützen 11 gelagerten Schwenkarme 9 unterstützen. Es wird bemerkt, dass es auch möglich ist die Vorrichtung mit nur einem Schwenkarm zu versehen. Die Schwenkarme 9 sind drehbar mittels einer hydraulischen Zylinder-Kolbeneinheit 12, die einerseits mit den Schwenkarmen 9 und anderseits mit einem Querbalken 13 verbunden ist. Dieser Querbalken 13 ist zwischen Endstücken 14 der Hauptstützbalken 8 befestigt. Für die Verbindung der Zylinder-Kolbeneinheit 12 mit den Schwenkarmen 9 ist zwischen diesen Schwenkarmen 9 ein Querbalken 15 montiert. In dieser Weise sind die Schwenkarme 9 drehbar zwischen eine in Fig. 1 gezeigte obere Stellung und eine in Fig. 2 gezeigte untere Stellung.

An dem von den Hauptstützbalken 8 abgekehrten Ende der Schwenkarme 9 ist ein Schneidschild 16 angeordnet, das fest an den Schwenkarmen 9 befestigt ist. Dieses Schneidschild 16 besitzt am unteren Ende ein stationäres Schneidmesser 17 und ein gegenüber diesem hin und her bewegliches Schneidmesser 18. Das stationäre, als Träger für das bewegliche Schneidmesser 18 arbeitende Schneidmesser 17 schliesst mit dem Schneidschild 16 einen derartigen stumpfen Winkel ein, dass die Schneidmesser 17, 18 nahezu in der Tangentialebene des Schneidkreises 19 liegen. Mit anderen Wörtern, die Schneidmesser 17, 18 stehen immer wenigstens nahezu senkrecht auf den Radius der kreisförmigen Bahn 19, die die Schneidzähne gegenüber dem Mittelpunkt 10 beschreiben, wenn die Schwenkarme 9 aus der oberen Stellung gemäss Fig. 1 nach der unteren Stellung gemäss Fig. 2 verstellt werden. In dieser Weise wird erreicht, dass die während des Schneidens durch auf dem Silagegut drücken von den Schneidmessern 17, 18 auftretenden Kräfte diese Schneidmesser nicht voneinander weg drücken, sodass kein Spiel zwischen den Schneidmessern 17, 18 auftritt und kein Gewächs zwischen die Schneidmesser gelangen kann. Dadurch bleibt eine gute Schneidwirkung aufrechterhalten.

Da das untere Ende des Schneidschildes 16 der grösste Kreis gegenüber der Achse 10 beschreibt, ist der stumpfe Winkel, der die Schneidmesser 17, 18 mit dem Schneidschild 16 einschliessen, derart gewählt, dass der Abstand zwischen dem freien Ende der Schneidmesser 17, 18 und der Achse 10 wenigstens gleich dem Abstand zwischen dem unteren Ende des Schneidschildes 16 oder dem oberen Ende der Schneidmesser 17, 18 und dieser Achse 10 ist. Hierdurch wird festlaufen von dem Schneidschild 16 in den Silagegut vermieden.

Das bewegliche Schneidmesser 18, das bei der gezeigten Ausführung an der Innenseite des stationären Schneidmesser 17 angeordnet ist, wird durch eine in der Zeichnung nur schematisch dargestellte, doppelwirkende, hydraulische Zylinder-Kolbeneinheit 20 angetrieben. Diese Zylinder-Kolbeneinheit 20 ist an sich kein Teil der vorliegenden Erfindung und ist näher erläutert in der niederländischen Patentanmeldung 8801537 von Anmelder. Der Aufbau der Schneidmesser 17, 18 gehört an sich gleichfalls nicht zum Gegenstand der vorliegenden Erfindung und für eine nähere Erläuterung wird auf die niederländische Patentanmeldung 8801220 von Anmelder hingewiesen.

Die Zylinder-Kolbeneinheit 20 des beweglichen Schneidmessers 18 wird gespeisst durch eine doppelwirkende Pumpzylinder-Kolbeneinheit 21, von der der in der Zeichnung nicht sichtbare Kolben angetrieben wird über ein schematisch dargestelltes Kurbelgetriebe 22, das mit einer angetriebenen Achse, zum Beispiel die Zapfwelle eines Schleppers, koppelbar ist. Dadurch wird in günstiger Weise ein sinusoidal verlaufender Oelstrom an die Zylinder-Kolbeneinheit 20 geliefert, wodurch dessen Kolben ohne weitere Zusatzmittel automatisch Schritt haltet mit dem Kolben der Pumpzylinder-Kolbeneinheit 21. Die Schneidgeschwindigkeit der Schneidmesser 17, 18 ist dadurch sehr hoch.

Die Pumpzylinder-Kolbeneinheit 21 sorgt auch für die Speisung von der Zylinder-Kolbeneinheit 12 zum abwärts schwenken der Schwenkarme 9. Dazu ist der Inhalt des Pumpzylinders etwas grösser als der Inhalt des Zylinders der Zylinder-Kolbeneinheit 20, sodass am Ende jedes Hubs einiges Oel zu die Zylinder-Kolbeneinheit 12 gepumpt wird und die Schwenkarme 9 abwärts verstellt werden. Für weitere Details zu dem in dieser Weise aufgebauten Hydrauliksystem wird auf die niederländische Patentanmeldung von Anmelder vom gleichen Datum hingewiesen, dessen Inhalt wie hier aufgenommen angesehen werden soll.

Die Schwenkarme 9 sind ausgebildet als teleskopische Arme, die jeder aus einem U-Balken 23 und einem in diesem schiebbaren rechteckigen Kastenbalken 24 bestehen. In der in der Zeichung dargestellten Seitenansicht ist der Steg eines U-Balken 23 zu sehen, da die U-Balken 23 mit der offenen Seiten zu einander zugekehrt sind. Durch diesen Teleskopaufbau der Schwenkarme 9 ist es möglich von der in Fig. 1 eingenommen Position des Gestells 2 aufeinander folgende Silagegutstücke 25, 26 und 27 aus dem Silagegutvorrat 1 zu schneiden. Durch die feste Verbindung des Schneidschildes 16 mit den Schwenkarmen 9 und den erwähnten stumpfen Winkel von den Schneidmessern 17, 18 gegenüber diesem Schneidschild 16 wird in jeder Stellung der teleskopischen Schwenkarme 9 eine optimale Schneidstellung der Schneidmesser 17, 18 gegenüber dem Schneidkreis 19 gewährleistet.

Dadurch dass die Breite des Ladebehälters 5 etwas grösser ist als die Breite des Schneidschildes 16, kann das Schneidschild 16 mittels der teleskopischen Schwenkarme 9 bis innerhalb des Ladebehälters 5 gezogen werden, sodass die ausgeschnittenen Silagegutstücke leicht in den Ladebehälter geschoben werden können.

Wie in der Zeichnung für eine Seite sichtbar ist, ist beidseitig von dem Schneidschild 16 ein an diesem Schneidschild anschliessendes Seitenschneidschild 28 angeordnet, das am unteren Ende mit einem nicht sichtbaren stationären Schneidmesser und einem an der Aussenseiten angeordneten hin und her beweglichen Schneidmesser 29 versehen ist. Das bewegliche Schneidmesser 29 wird durch eine schematisch gezeigte doppelwirkende Zylinder-Kolbeneinheit 30 angetrieben. Die Zylinder-Kolbeneinheiten 30 der beiden Seitenschneidschilde 28, von der in der Zeichnung nur eine sichtbar ist, sind parallel mit der Zylinder-Kolbeneinheit 20 des Schneidmessers 18 an der Pumpzylinder-Kolbeneinheit 21 angeschlossen.

Wie mit Strichlinien angegeben ist, sind an der von dem Schneidschild 16 abgekehrten Seite des Ladebehälters 5 Dosiermittel 31 angeordnet, die mit einer drehbaren Walze 32 und einem Querförderer 33 versehen sind. Bei der beschriebenen Vorrichtung werden die teleskopischen Schwenkarme 9 mit dem Schneidschild 16 mit Vorteil angewandt für Zuführen von dem ausgeschnittenen Silagegut zu diesen Dosiermitteln. Dadurch kann der Ladebehälter 5 mit einem einfachen flachen Boden ohne Fördermittel versehen sein.

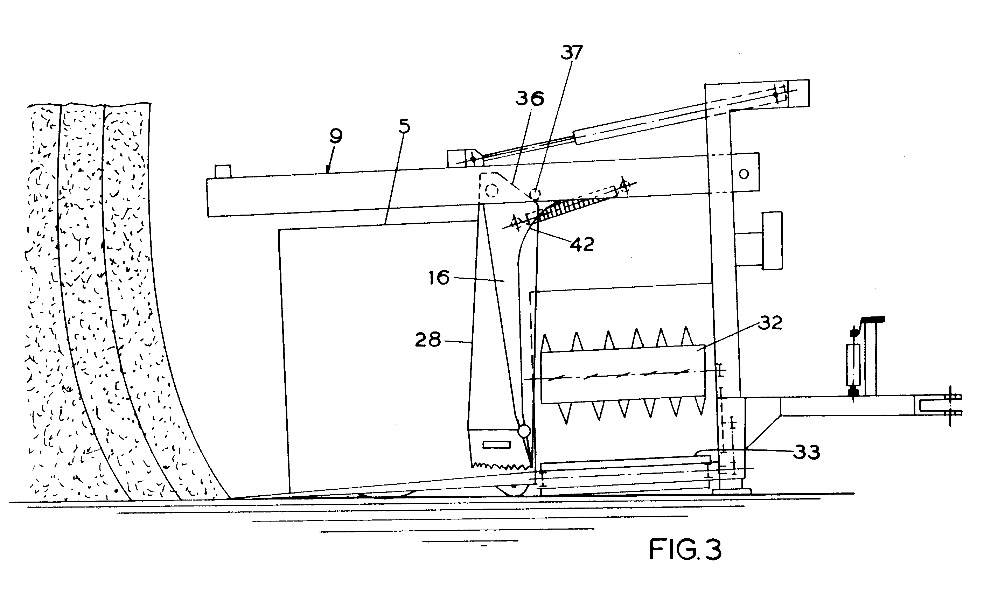

Die Kastenbalken 24 mit dem an diesen befestigten Schneidschild 16 können bis einer in Fig. 3 gezeigten Stellung in dem Ladebehälter 5 zurückgezogen werden zum Zuführen von Silagegut an die Dosiermittel 31. Um zu vermeiden dass dabei ein oder beide Seitenschneidschilde 28 ein Hinderniss formen würden für die zu einer oder zwei Seiten abführenden Dosiermittel 31, sind diese Seitenschneidschilde 28 drehbar um eine Achse 34 mit den Schwenkarmen 9 verbunden. Eine Feder 35 haltet dabei die Seitenschneidschilde 28 normalerweise in der für das Schneiden gewünschten Stellung gemäss Fig. 1 und 2. Während einziehen der teleskopischen Schwenkarmen 9 zu die in Figur 3 gezeigte Endstellung läuft die obere Seite 36 des oder jedes Seitenschneidschildes 28 über einem schematisch angegebenen Nocken 37, wodurch das oder jedes Seitenschneidschild 28 weggedreht wird.

Die Kastenbalken 24 sind schiebbar in den U-Balken 23 mittels einer Zylinder-Kolbeneinheit 38, deren Kolbenstange Rollen 39 trägt. Um diese Rollen 39 sind zwei Kabel 40, 41 geführt, die in der angegebenen Weise mit Ihren Enden an dem Kastenbalken 24 bzw. dem U-Balken 23 befestigt sind.

Aus dem Obenstehenden wird klar sein, dass die beschriebene Vorrichtung das wichtige Vorteil hat, dass durch die feste Verbindung zwischen dem Schneidschild 16 und Schwenkarmen 9 und den zugehörigen gewählten stumpfen Winkel zwischen den Schneidmessern 17, 18 und dem Schneidschild 16 die Schneidmesser immer die richtige Stellung gegenüber dem Schneidkreis 19 einnehmen. Durch den teleskopischen Aufbau der Schwenkarme 9 können einige aufeinander folgende Silagegutstücke ohne Schwierigkeiten ausgeschnitten werden, während die ausgeschnittenen Silagegutstücke weiter leicht in dem Ladebehälter 5 geschoben werden können. Ueberdies kan mit dem Schneidschild 16 das in dem Ladebehälter geschobene Silagegut mittels der teleskopischen Schwenkarme 9 an die Dosiermittel zugeführt werden.

Es wird bemerkt, dass es möglich ist der Ladebehälter 5 durch Schwenken von den Rädern 3 in eine erhöhte Stellung zu bringen zum Schneiden von Silagegut aus einem Silagegutvorrat mit grosser Höhe.

Weiter wird bemerkt, dass an der Innenseite des Schneidschildes 16 eine bogenförmig gebogene Führungsplatte 42 montiert ist, die das ausgeschnittene Silagegut innenwärts abbiegt, sodass bei einem Silagegutvorrat, der höher ist als das Schneidschild 16, die Schwenkarme 9 nicht auf das ausgeschnittene Teil des Silagegutes drücken werden während des Schneidens.

Die beschriebene Vorrichtung kann auf Wunsch auch ein grösseres Silagegutstück auf einmal ausschneiden, zum Beispiel einen Block, der die Teile 25, 26 und 27 enthält. In diesem Fall wird bevorzugt in dem Ladebehälter 5 gerade für die Dosiermittel 31 eine Schneidvorrichtung anzuordnen, die der Silagegutblock bevor zuführen an die Dosiermittel 31 in kleinere Teile schneidet. Eine solche Schneidvorrichtung kann zum Beispiel mit einer Anzahl von mit regelmässigen Zwischenabständen senkrecht angeordneten Paaren Schneidmesser von der gleichen Art wie die Schneidmesser 17, 18 versehen sein. Die beweglichen Schneidmesser können in diesem Fall durch eine gemeinsame Zylinder-Kolbeneinheit angetrieben werden.

Eine in dieser Weise ausgebildete Vorrichtung kann auch angewandt werden für Dosieren von Futterpäcken oder -Ballen, die nicht aus einem Silagegutvorrat geschnitten werden müssen.

Dadurch dass das Schneidschild 16 fest mit den Schwenkarmen 9 verbunden ist, wird erreicht, dass das Schneidschild nicht durch unachtsamkeit des Benutzers in diese Schneidvorrichtung oder andere an diesem Ende des Ladebehälters 5 angeordneten Mittel gedrückt werden kann, wie bei der drehbare Befestigung gemäss dem Stand der Technik möglich ist.

Obwohl im Obenstehenden eine Vorrichtung mit einem fahrbahren Gestell 2 beschrieben ist, ist es als Alternative möglich die Vorrichtung mit einem Gestell auszubilden, dass mit der Hebevorrichtung eines Schleppers koppelbar ist.

Beim beschriebenen Ausführungsbeispiel ist angegeben, dass zwei Schwenkarme 9 angeordnet sind, die jeder aus einem U-Balken 23 und einem in diesem schiebbaren Kastenbalken 24 bestehen. Es wird klar sein, dass der gesamte Aufbau der U-Balken 23 und Kastenbalken 24 auch wie ein Schwenkarm 9 angesehen werden kann. Zur Versteifung werden zwischen den beiden U-Balken 23 bzw. den beiden Kastenbalken 24 Verbindungen angeordnet sein.

Die Erfindung ist nicht beschränkt auf die im Obenstehenden beschriebene Ausführung, die im Rahmen der Erfindung in verschiedenen Weisen abgeändert werden können.

## Patentansprüche

1. Vorrichtung zum Schneiden von Silagegut aus einem Silagegutvorrat, mit einem Schneidschild (16) mit einem am unteren Ende eines Trägers (17) angeordneten, hin und her beweglichen Schneidmesser (18), welches Schneidschild am oberen Ende mit dem einen Ende wenigstens eines Schwenkarmes (9) zur auf- und abwärts Verstellung von dem Schneidschild verbunden ist und mit dem Träger (17) einen stumpfen Winkel einschliesst, welcher Schwenkarm am anderen Ende drehbar in einem Gestell (2) mit einem Ladebehälter (5) mit offenem Zuführende für das Silalegut gelagert ist, wobei Mittel (38) vorgesehen sind zur hin und der Verstellung von dem mit dem Schneidschild verbundenen Ende des Schwenkarmes gegenüber dem Ladebehälter, dadurch gekennzeichnet, dass das Schneidschild (16) in einer durch den stumpfen Winkel vorherbestimmten Stellung gegenüber dem/jedem Schwenkarm (9) festgesetzt ist, wobei der Träger (17) des Schneidmessers (18) in dieser Stellung des Schneidschildes in jeder Stellung des/jedes Schwenkarmes wenigstens nahezu in der Tangentialebene des Schneidkreises (19) liegt.

2. Vorrichtung gemäss Anspruch 1, dadurch gekennzeichnet, dass die Stellung des Trägers (17) des Schneidmessers (18) derart gewählt ist, dass der Abstand zwischen dem freien Ende des Schneidmessers und dem Drehpunkt (10) des/jedes Schwenkarmes (9) nahezu gleich dem Abstand von dem Drehpunkt zu das oberen Ende des Trägers/des Schneidmessers ist.

3. Vorrichtung gemäss Anspruch 1 oder 2, dadurch gekennzeichnet, dass die erwähnten Mittel (38) das Schneidschild bis innerhalb des Ladebehälters (5) verstellen können.

4. Vorrichtung gemäss Anspruch 3, wobei der Ladebehälter (5) an der vom Schneidschild (16) abgekehrten Seite mit Dosiermittel (31) für dosiert Abgeben von dem Silagegut versehen ist, dadurch gekennzeichnet, dass das Schneidschild (16) durch die erwähnten Mittel (38) innerhalb des Ladebehälters (5) verstellbar ist zum Zuführen des Silagegutes an die Dosiermittel (31).

5. Vorrichtung gemäss einem der vorstehenden Ansprüche, dadurch gekennzeichnet, dass der Schwenkarm (9) teleskopisch ein- und ausschiebbar ist und vorzugsweise zwei U-Balken (23) umfasst, die mit der offenen Seite zu einander zugekehrt sind, wobei in diesen U-Balken (23) ein mit dem Schneidschild (16) verbundener zusammengesetzter Balken (24) schiebbar ist.

6. Vorrichtung gemäss einem der vorhergehenden Ansprüche, dadurch gekennzeichnet, dass das bewegliche Schneidmesser (18) an der Innenseite des zugehörigen Trägers (17) angeordnet ist.

7. Vorrichtung gemäss einem der vorhergehenden Ansprüche, dadurch gekennzeichnet, dass an einer oder beiden Seiten des Schneidschildes (16) ein an diesem Schneidschild anschliessendes Seitenschneidschild (28) angeordnet ist, das am unteren Ende ein Träger mit einem hin und her beweglichen Schneidmesser (29) hat.

8. Vorrichtung gemäss Anspruch 7, dadurch gekennzeichnet, dass der Träger (17) des Schneidschildes (16) und gegebenenfalls des (jedes) Seitenschneidschildes (28) als stationäres Schneidmesser ausgebildet ist.

9. Vorrichtung gemäss Anspruch 7 oder 8, dadurch gekennzeichnet, dass das Schneidmesser (29) des (jedes) Seitenschneidschildes (28) an der Aussenseite des zugehörigen Trägers angeordnet ist.

10. Vorrichtung gemäss einem der vorhergehenden Ansprüche 4-9, dadurch gekennzeichnet, dass zwischen dem Schneidschild (16) und den Dosiermitteln (31) eine Schneidvorrichtung angeordnet ist.

## Claims

1. A device for cutting silage material from a silage material supply, with a cutting plate (16) with a cutting blade (18) which is arranged at the lower end of a support (17) and is movable to-and-fro, the cutting plate being connected at its upper end with one end of at least one pivot arm (9) for the upward and downward adjustment of the cutting plate and forming an obtuse angle with the support (17), the pivot arm being rotatably mounted at its other end in a frame (2) with a loading container (5) with an open supply end for the silage material, means (38) being provided for the to-and-fro adjustment of the end of the pivot arm connected with the cutting plate relative to the loading container, characterised in that the cutting plate (16) is fixed relative to the/each pivot arm (9) in a position predetermined by the obtuse angle, the support (17) of the cutting blade (18) in this position of the cutting plate lying at least approximately in the tangential plane of the cutting circle (19) in each position of the/each pivot arm.

2. A device according to claim 1, characterised in that the position of the support (17) of the cutting blade (18) is selected in such a manner that the distance between the free end of the cutting blade and the pivot point (10) of the/each pivot arm (9) is approximately equal to the distance between the pivot point and the upper end of the support/the cutting blade.

3. A device according to claim 1 or 2, characterised in that the said means (38) can adjust the cutting plate (16) until the latter extends within the loading container (5).

4. A device according to claim 3, the loading container (5) being provided on the side remote from the cutting plate (16) with dosing means (31) for the metered deposition of the silage material, characterised in that the cutting plate (16) is adjustable by the said means (38) within the loading container (5) in order to supply the silage material to the dosing means (31).

5. A device according to one of the preceding claims, characterised in that the pivot arm (9) is telescopically retractable and extendable and preferably comprises two U-beams (23) facing one another with their open sides, a composite beam (24) connected with the cutting plate (16) being slidable within said U-beams (23).

6. A device according to one of the preceding claims, characterised in that the movable cutting blade (18) is arranged on the inner side of the associated support (17).

7. A device according to one of the preceding claims, characterised in that arranged on one or both sides of the cutting plate (16) is a lateral cutting plate (28), which adjoins the cutting plate (16) and at its lower end comprises a support with a cutting blade (29) movable to-and-fro.

8. A device according to claim 7, characterised in that the support (17) of the cutting plate (16) and optionally the (each) lateral cutting plate (28) is designed as a stationary cutting blade.

9. A device according to claim 7 or 8, characterised in that the cutting blade (29) of the (each) lateral cutting plate (28) is arranged on the outer side of the associated support.

10. A device according to one of the preceding claims 4 to 9, characterised in that a cutting device is arranged between the cutting plate (16) and the dosing means (31).

## Revendications

1. Dispositif pour couper du fourrage dans une réserve de fourrage ensilé, comprenant une lame de coupe (16) et un couteau (18) mobile alternativement et disposé à une extrémité inférieure d'un support (17), ladite lame étant reliée à l'extrémité supérieure à l'une des extrémités d'au moins un bras oscillant (9) pour le déplacement vers le haut et vers le bas de la lame et inscrivant avec le support (17) un angle obtus, l'autre extrémité du bras oscillant étant montée rotative dans un bâti (2) comportant un bac (5) de chargement de fourrage dont l'extrémité d'admission est ouverte, des moyens (38) étant prévus pour le déplacement alternatif de l'extrémité du bras oscillant reliée à la lame par rapport au bac de chargement, caractérisé en ce que la lame (16) est fixée à une position prédéterminée par l'angle obtus par rapport au/à chaque bras oscillant (9), le support (17) du couteau (18) étant situé à chaque position du/ de chaque bras oscillant au moins approximativement dans le plan tangentiel du cercle de coupe (19) lorsque la lame occupe cette position.

2. Dispositif selon la revendication 1, caractérisé en ce que la position du support (17) du couteau (18) est adoptée de manière que la distance séparant l'extrémité libre du couteau et le centre de rotation (10) du/de chaque bras oscillant (9) soit à peu près égale à la distance du centre de rotation à l'extrémité supérieure du support/du couteau.

3. Dispositif selon la revendication 1 ou 2, caractérisé en ce que les moyens mentionnés (38) peuvent déplacer la lame (16) jusque dans le bac de chargement (5).

4. Dispositif selon la revendication 3, dans lequel le bac (5) est équipé, du côté tourné à l'opposé de la lame (16), d'organes doseurs (31) pour le déversement dosé de fourrage, caractérisé en ce que la lame (16) est déplaçable par les moyens mentionnés (18) à l'intérieur du bac (5) pour le refoulement de fourrage vers les organes doseurs (31).

5. Dispositif selon l'une des revendications précédentes, caractérisé en ce que le bras oscillant (9) peut effectuer un mouvement d'insertion et de retrait télescopique et il comprend avantageusement deux poutres (23) en étrier dont les côtés ouverts sont tournés l'un vers l'autre, une poutre rapportée (24), reliée à la lame (16), étant coulissante dans ces poutres (23) en étrier.

6. Dispositif selon l'une des revendications précédentes, caractérisé en ce que le couteau mobile (18) est disposé sur le côté intérieur du support correspondant (17).

7. Dispositif selon l'une des revendications précédentes, caractérisé en ce qu'une lame latérale (28) formant un prolongement de la lame (16) et disposée sur l'un ou sur les deux côtés de cette lame (16) comporte à l'extrémité inférieure un support ainsi qu'un couteau (29) mobile alternativement.

8. Dispositif selon la revendication 7, caractérisé en ce que le support (17) de la lame (16) et éventuellement de la (de chaque) lame latérale (28) est conformé en couteau occupant une position fixe.

9. Dispositif selon la revendication 7 ou 8, caractérisé en ce que le couteau (29) de la (de chaque) lame latérale (28) est disposé sur le côté extérieur du support correspondant.

10. Dispositif selon l'une des revendications précédentes 4-9, caractérisé en ce qu'un dispositif de coupe est disposé entre la lame (16) et les organes doseurs (31).
